# EUROPEAN PATENT APPLICATION

(11) **EP 1 600 869 A1**
(43) Date of publication of application: **30.11.2005**
(21) Application number: 04705186.7
(22) Date of filing: 26.01.2004
(51) Int. Cl.: G06F 17/60

(54) **CONTENT PROCESSING TERMINAL, COPY RIGHT MANAGEMENT SYSTEM, AND METHOD THEREOF**

(30) Priority: 10.02.2003 JP 2003032507
(71) Applicant: KABUSHIKI KAISHA TOSHIBA, tokyo 1058001 (JP)
(72) Inventor: MIURA, Akira C/O Intellectual Property Division, Minato-ku, Tokyo 105-8001 (JP); SUU, Hiroshi C/O Intellectual Property Divisinon, Minato-ku, Tokyo 105-8001 (JP); KASAHARA, Akihiro C/O Intellectual Property, Minato-ku, Tokyo 105-8001 (JP); NAKANO, Kazunori C/O Intellectual Property, Minato-ku, Tokyo 105-8001 (JP)
(74) Representative: Midgley, Jonathan Lee
(86) International application number: PCT/JP2004/000657
(87) International publication number: WO 2004/070641

(57) **Abstract**

In a content processing terminal, a package memory (48) which stores a package (9) in which metadata (12) containing copyright information of a secondary use content (13) and an encrypted content (13) is arranged. Input new data (11a) is sequentially written in a new creation memory (61). The metadata (12) of the secondary use content (13) is written in the new creation memory (61) in accordance with a secondary use request for the content.

The encrypted content (13) is decrypted by using a key (10) which is input for pay, the decrypted content (13a) is inserted in the new data (11a), and the new data (11) in which the decrypted content is inserted is displayed and output.

## Description

### Technical Field

The present invention relates to a content processing terminal which creates and displays a new content such as a document, graphic, or video by secondary use of a content already having a copyright, a copyright management system incorporating the content processing terminal, a content processing method, and a copyright management method.

### Background Art

When a new content such as a document, graphic, or video is to be created and distributed to many unspecified persons for pay or free, a copyright is present for the created content. The copyright must be protected.

In addition, a person who wants to create a new content such as a document, graphic, or video often makes secondary use of a content by inserting a content created by another person and having an already registered copyright to a new content such as a document, graphic, or video created by himself/herself.

In this case, it is necessary to protect the copyright for the newly created content including the secondarily used content. It is also necessary to protect the copyright for the content secondarily used for the new content.

A method of acquiring permission for secondary use of a content and a method of managing the secondary use copyright of a secondarily used content have already been proposed in Jpn. Pat. Appln. KOKAI Publication No. 2001-325387.

In the method described in Jpn. Pat. Appln. KOKAI Publication No. 2001-325387, a person who wants to create a new content sends a secondary use license (copyright) issue request to a copyright management server before secondary use of a content. Upon obtaining secondary use permission, the person who creates a new content inserts the content and a content created by himself/herself in a new capsule. He/she registers, in the copyright management server, secondary use of the content inserted in the new capsule.

In the method described in Jpn. Pat. Appln. KOKAI Publication No. 2001-325387, however, the person who creates a new content writes the content and a content created by himself/herself in a new capsule when obtaining secondary use permission. That is, the new capsule contains the content such as a document or image created by the person and the secondary use content such as a document or image already having a copyright.

In the new content created by the person who creates a new content and written in the new capsule, the data created by the person and the data of the secondary use content are inserted. A third party who acquires the new capsule can easily copy the contents of the new content containing the inserted secondary use content. As a result, the security of the copyright of the secondary use content decreases.

### Disclosure of Invention

It is an object of the present invention to provide a content processing terminal which can reliably protect the copyright of a secondary use content inserted in a newly created content and when the new content containing the inserted secondary use content is distributed for pay, properly distinguishably collect the royalty fee for the new data in the new content and the royalty fee for the secondary use content in the new content, a copyright management system incorporating the content processing terminal, a content processing method, and a copyright management method.

According to present invention, a content processing terminal which creates and displays a new content by secondarily using a content having a copyright for new data, comprises, a package memory which temporarily stores a package in which metadata containing copyright information of the secondary use content and an encrypted content, new data write means for writing sequentially input new data in a new creation memory, metadata write means for writing the metadata of the secondary use content in the new creation memory in accordance with a secondary use request for the content, new content read means for reading out the new data and the metadata stored in the new creation memory as a new content, and new content display means for decrypting the encrypted content by using a key which is input from an external device for pay, inserting the decrypted content in the new data, and displaying and outputting the new data in which the decrypted content is inserted.

In the content processing terminal having this arrangement, the new data input by the operator of the content processing terminal and the metadata containing the copyright information of the secondary use content are stored in the new creation memory. That is, the contents (data) themselves of the secondary use content such as a document or image are not stored in the new creation memory at all. Since the content to be secondarily used in the new content containing the new data and metadata stored in the new creation memory cannot be copied, the copyright of the secondary use content is reliably protected.

When the key of the secondary use content is present, the contents of the secondary use content can be browsed. Hence, the operator of the content processing terminal can confirm the new data in which the secondary use content is inserted.

According to another invention, in the content processing terminal of the above-described invention, the metadata contains permission enable/disable information representing whether secondary use of a corresponding content is permitted. When the permission enable/disable information represents inhibition, secondary use of the content is inhibited.

As described above, the metadata of the content stored in the package memory contains the permission enable/disable information representing whether secondary use of the content is permitted. Hence, the copyright of each content can more carefully be managed.

According to another invention, the content processing terminal of the above-described invention, further comprises, transmission means for transmitting the new content read out from the new creation memory and the package, reception means for receiving a new content and a package from an external device, and new content display means for decrypting the content in the received package by using the key which is input from the external device, inserting the decrypted content in the new data in the received new content, and displaying and outputting the new data in which the decrypted content is inserted.

In the content processing terminal having this arrangement, when a new content created by the operator of the content processing terminal is transmitted to another content processing terminal operated by another person, the operator of the content processing terminal of the transmission destination can browse the actual contents of the received new content on the display window only when he/she has the package of the secondary use content and the key of the secondary use content.

According to another invention, the content processing terminal of the above-described invention, further comprises, transmission means for sending the new data in which the content is inserted and corresponding metadata to a copyright management apparatus.

In the content processing terminal having this arrangement, only when the copyright for the new content is to be registered, the new data containing the inserted content and corresponding metadata are sent to the copyright management apparatus.

According to another invention, a copyright management system comprises a content processing terminal of the above-described invention and a copyright management apparatus which manages a copyright for a new content created by the content processing terminal.

The copyright management apparatus comprises, a copyright database which stores, for each content, copyright information of the content, a key to decrypt encrypted content, and sales information, copyright registration means for registering copyright information and the key containing specific information which specifies new data and the content in the copyright database while regarding new data in which the content is inserted and which is received from the content processing terminal as the new content, package creation means for outputting a package in which metadata containing copyright information of each of the new data and the content and the new content which is encrypted again by the key are inserted, and copyright sales management means for adding each sales information designated by each specific information contained in the key which is provided to the content processing terminal for pay.

In the copyright management system having this arrangement, in the copyright management apparatus, the new data in which the content received from the content processing terminal is inserted is registered in the copyright database as a new content. In this case, the key containing specific information which specifies the new data and content is also registered in the copyright database. Since the key provided to the content processing terminal for pay contains the information which can specify the new data and secondary use content, the copyright of each of the new data and secondary use content can individually be managed.

According to another invention, a content processing method of creating and displaying a new content by secondarily using an encrypted content having a copyright for new data, comprises, writing input new data and metadata containing copyright information of the content to be secondarily used for the new data in a new creation memory as a new content, and decrypting the encrypted content by using a key which is input from an external device for pay, inserting the decrypted content in the new data, and displaying and outputting the new data in which the decrypted content is inserted.

Even in the content processing method having this arrangement, almost the same functions and effects as those of the content processing terminal of the above invention can be obtained.

According to another invention, a copyright management method comprises, inputting new data in which a content having a copyright is secondarily used and metadata containing copyright information of the secondarily used content, registering copyright information and a key containing specific information which specifies the new data and the content in a copyright database while regarding the input new data as a new content, the copyright database storing, for each content, copyright information of the content, a key to decrypt encrypted content, and sales information, and adding each sales information in the copyright database, which is designated by each specific information contained in the key which is provided for pay.

### Brief Description of Drawings

FIG. 1 is a schematic view showing the schematic arrangement of a content sales system to which a content processing method and copyright management method according to an embodiment of the present invention are applied and in which a content processing terminal and copyright management system are incorporated;
FIG. 2 is a view showing the structure of a package distributed in the content sales system according to the embodiment;
FIG. 3 is a block diagram showing the detailed arrangement of the content sales system according to the embodiment;
FIG. 4 is a view showing the contents stored in a copyright database formed in the copyright management apparatus incorporated in the content sales system according to the embodiment;
FIG. 5 is a block diagram showing the arrangement of a client terminal incorporated in the content sales system according to the embodiment;
FIG. 6A is a view showing the contents displayed on the display device of the client terminal;
FIG. 6B is a view showing the contents displayed on the display device of the client terminal;
FIG. 6C is a view showing the contents displayed on the display device of the client terminal;
FIG. 6D is a view showing the contents displayed on the display device of the client terminal;
FIG. 7 is a flowchart showing the operation of the client terminal;
FIG. 8 is a flowchart showing the operation of the client terminal;
FIG. 9 is a flowchart showing the operation of the client terminal; and
FIG. 10 is a flowchart showing the operation of the copyright management apparatus incorporated in the content sales system according to the embodiment.

### Best Mode for Carrying Out the Invention

An embodiment of the present invention will be described below.

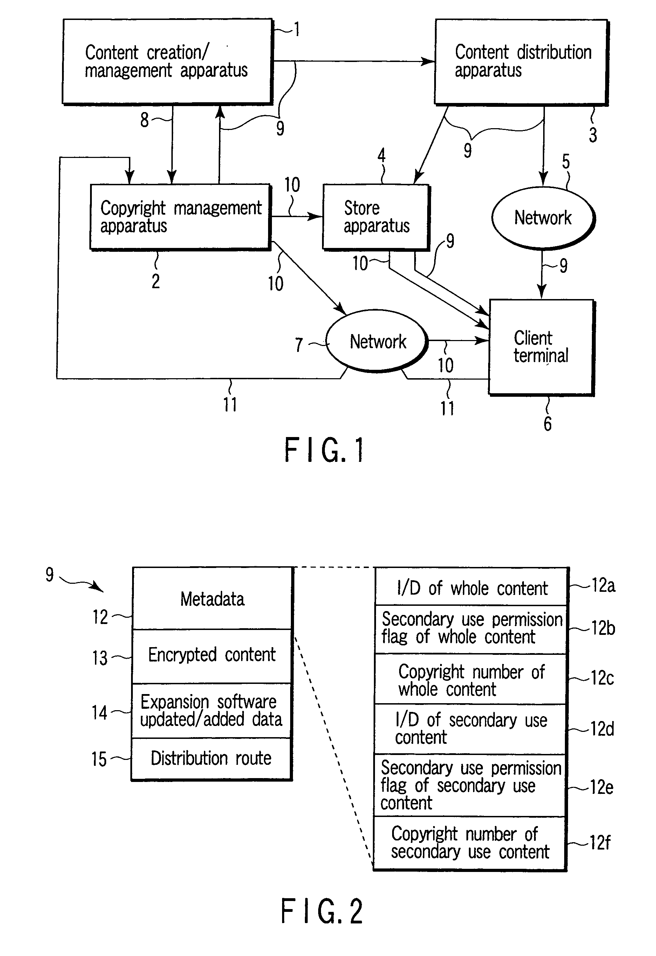

FIG. 1 is a schematic view showing the schematic arrangement of a content sales system to which a content processing method and copyright management method according to an embodiment of the present invention are applied and in which a content processing terminal and copyright management system are incorporated.

In this content sales system, a content creation/management apparatus 1 creates a content to be sold to a customer and manages a package 9 in which the content is inserted. A copyright management apparatus 2 executes copyright registration for a content 8 created by the content creation/management apparatus 1 and new data 11 which is received from a client terminal 6 serving as a content processing terminal and in which a secondary use content is inserted. The copyright management apparatus 2 also encrypts the content 8 and new data 11, inserts them in the package 9, and provides a key 10 to decrypt an encrypted content 13 to a store apparatus 4 and the client terminal 6 for pay.

The client terminal 6 serving as a content processing terminal and the copyright management apparatus 2 form a copyright management system.

A content distribution apparatus 3 distributes the package 9 delivered from the content creation/management apparatus 1 to the client terminal 6 through a network 5 and also to the store apparatus 4. The store apparatus 4 is installed in, e.g., a bookstore or software store. The store apparatus 4 distributes, to a customer, a recording medium such as a memory card on which the package 9 distributed from the content distribution apparatus 3 is recorded. The store apparatus 4 also writes the key 10 for a designated content, which is received from the copyright management apparatus 2, on a recording medium such as a memory card and sells it to the customer.

The client terminal 6 such as a PC owned by the customer receives the package 9 for free from the content distribution apparatus 3 through the network 5. The client terminal 6 also receives the key 10 for pay from the copyright management apparatus 2 through a network 7. The customer mounts, in the client terminal 6, the memory card on which the key 10 purchased by the store apparatus 4 is written. The client terminal 6 decrypts the encrypted content 13 inserted in the package 9 by using the key 10, expands the content by using expansion software, and displays the content on a display device.

The package 9 including software modules contains metadata 12 representing the attribute of the content, including the content copyright information, the encrypted content 13, expansion software updated/added data 14, and a distribution route 15, as shown in FIG. 2. The distribution route 15 is written when the package 9 is distributed from the content distribution apparatus 3 to the client terminal 6 or store apparatus 4.

The metadata 12 contains an ID 12a of the whole content contained in the package 9, a secondary use permission flag 12b for the whole content, and a copyright number 12c as copyright information for the whole content. When the whole content contains a secondary use content, the metadata 12 also contains an ID 12d of the secondary use content, a secondary use permission flag 12e for the secondary use content, and a copyright number 12f as copyright information for the secondary use content.

The expansion software updated/added data 14 is update data or added data of expansion software to expand decrypted content obtained by decrypting the encrypted content 13 inserted in the package 9 by using the key 10. The client terminal 6 updates or adds expansion software of its own by the expansion software updated/added data 14 inserted in the package 9. Accordingly, the content inserted in the package 9 can be expanded and displayed.

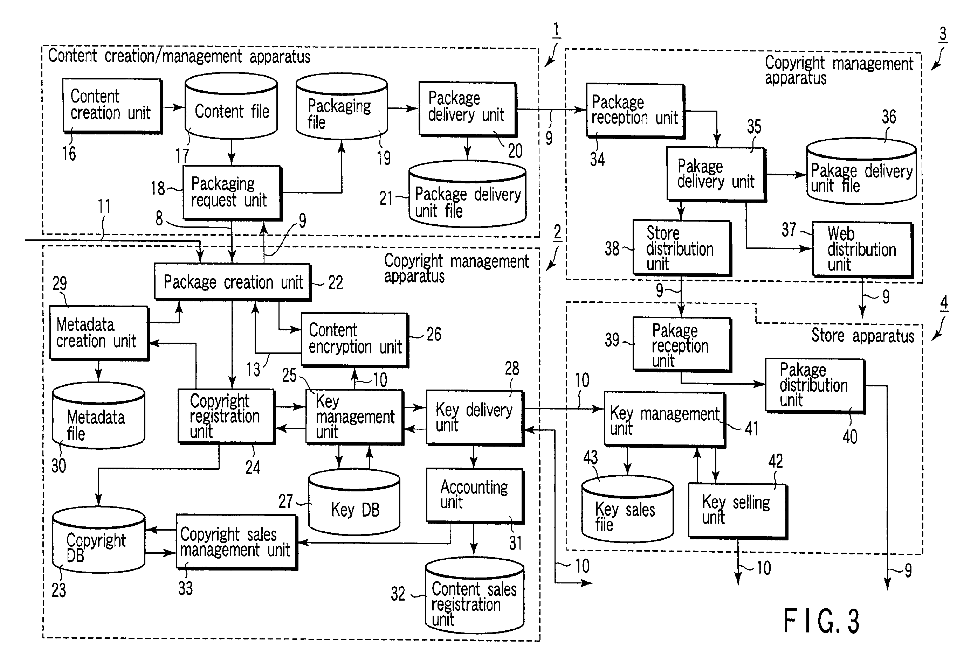

FIG. 3 is a block diagram showing the detailed arrangements of the content creation/management apparatus 1, copyright management apparatus 2, content distribution apparatus 3, and store apparatus 4 in the content sales system.

In the content creation/management apparatus 1, a content creation unit 16 creates the original content 8 such as a document, graphic, or video and stores the content 8 in a content file 17. A packaging request unit 18 sends the content 8 in the content file 17 to the copyright management apparatus 2. The packaging request unit 18 also stores the package 9 received from the copyright management apparatus 2 in a package file 19. A package delivery unit 20 delivers each package 9 in the package file 19 to the content distribution apparatus 3. The package delivery unit 20 also registers the delivery record of each package 9 in a package delivery file 21.

In the copyright management apparatus 2, a package creation unit 22 creates the package 9 shown in FIG. 2 on the basis of the content 8 input from the content creation/management apparatus 1 or the new data 11 having an inserted secondary use content, which is input from the client terminal 6 through the network 7, and transmits the package 9 to the content creation/management apparatus 1.

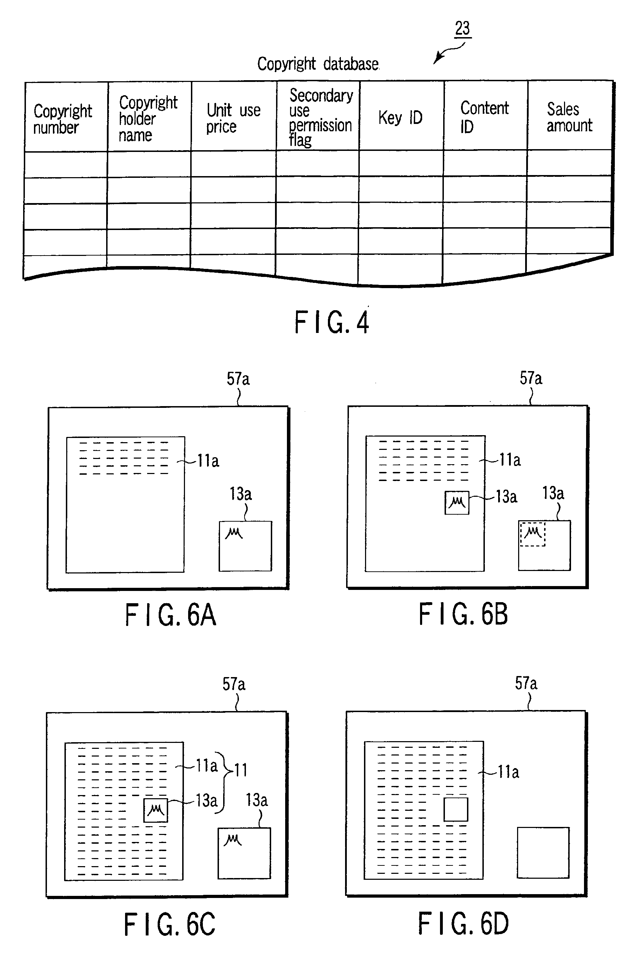

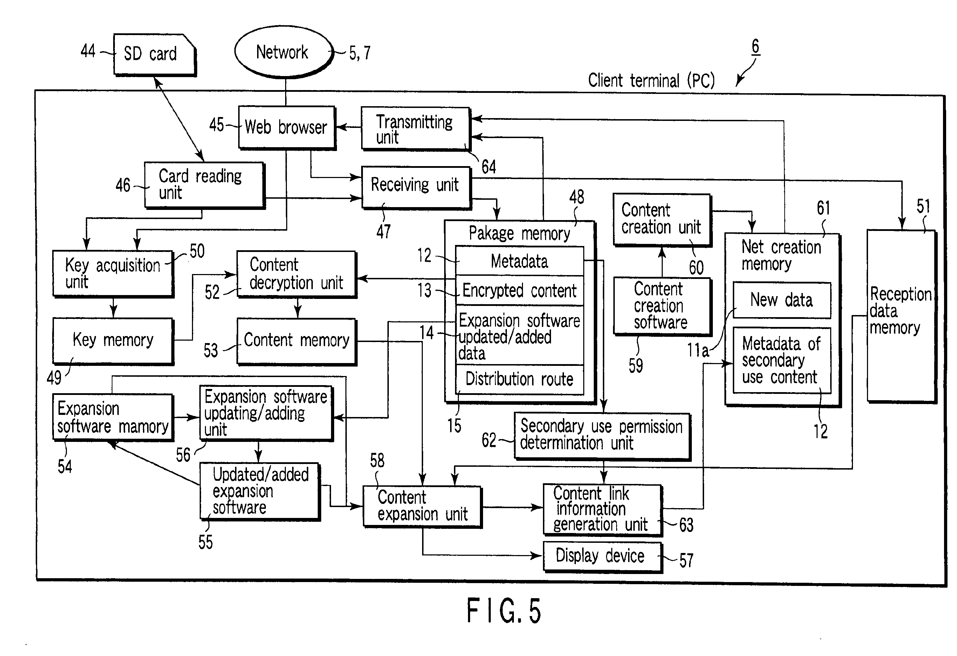

As shown in FIG. 4, a copyright database (DB) 23 stores a copyright number, copyright holder name, unit use price, secondary use permission flag, key ID, content ID, and sales amount for every copyright managed by the copyright management apparatus 2. In this embodiment, the items stored in the copyright database (DB) 23 are a copyright number, copyright holder name, unit use price, secondary use permission flag, key ID, content ID, and sales amount. New items may be added, or some items may be deleted or changed as needed.

A copyright registration unit 24 newly registers, in the copyright database (DB) 23 shown in FIG. 4, the content 8 input from the content creation/management apparatus 1 or the new data 11 having an inserted secondary use content, which is input from the client terminal 6. In addition, the copyright registration unit 24 transmits, to a key management unit 25, an issue request for the key 10 containing specific information that specifies only the content 8 or both the new data 11 and the secondary use content inserted in the new data 11. The key ID of the obtained key 10 is registered in the copyright database (DB) 23.

The key management unit 25 creates the key 10 on the basis of the issue request and sends the key 10 to a content encryption unit 26. The key management unit 25 also registers the key 10 in a key (DB) database 27. The key management unit 25 also reads out the key 10 from the key (DB) database 27 in accordance with the request for the key 10 with a designated content from a key delivery unit 28 and returns the key 10 to the key delivery unit 28. The content encryption unit 26 encrypts the input content 8 or new data 11 in accordance with conditions which allow decryption by the input key 10 and sends the encrypted content 13 to the package creation unit 22.

A metadata creation unit 29 creates the metadata 12 shown in FIG. 2 for the input content 8 or new data 11 and sends the metadata 12 to the package creation unit 22. The metadata creation unit 29 also stores the created metadata 12 in a metadata file 30.

In accordance with the transmission request of the key 10 with a designated content from the client terminal 6 or store apparatus 4, the key delivery unit 28 requests the key 10 corresponding to the content of the key management unit 25. The key delivery unit 28 transmits, to the client terminal 6 or store apparatus 4 as the request source, the key 10 received from the key management unit 25 for pay. In addition, the key delivery unit 28 transmits the delivery record of the key 10 to an accounting unit 31 and a copyright sales management unit 33. The accounting unit 31 updates the content sales amount in a content sales registration file 32 on the basis of the delivery record.

The copyright sales management unit 33 increases the sales amount of the content in the copyright database (DB) 23 by the unit use price, which is designed by the specific information contained in the key 10 distributed for pay. If the specific information contained in the key 10 specifies both the new data 11 and the secondary use content inserted in the new data 11, the sales amounts of both of the new data 11 and the secondary use content contained in the new data 11 are increased in accordance with a predetermined allocation ratio.

In the content distribution apparatus 3, the package 9 is delivered from the content creation/management apparatus 1 to a package reception unit 34. A package distribution unit 35 adds, to the package 9, the distribution route 15 of the content distribution apparatus 3 of its own and a Web delivery unit 37 and then distributes the package 9 to the client terminal 6 that has transmitted the distribution request. The package distribution unit 35 also adds, to the delivered package 9, the distribution route 15 of the content distribution apparatus 3 of its own and the store apparatus 4 of the distribution destination and then distributes the package 9 to a store distribution unit 38. In addition, the package distribution unit 35 registers the distribution record of the package 9 in a package distribution file 36.

The store distribution unit 38 writes the input package 9 on a compact memory card such as an SD (Secure Digital) memory card and distributes the package 9 to the store apparatus 4 installed in a bookstore or software store.

In the store apparatus 4, the package 9 from the content distribution apparatus 3 is received by a package reception unit 39. A package distribution unit 40 causes a clerk (salesclerk) to distribute for free the memory card on which the package 9 is recorded to a customer who wants it. When the customer inputs a key purchase request with a content designation to a key selling unit 42, the key selling unit 42 transmits the key purchase request to a key management unit 41.

The key management unit 41 transmits the key transmission request with the content designation to the copyright management apparatus 2. When the corresponding key 10 is input from the copyright management apparatus 2, the key management unit 41 writes the key 10 on a memory card which is different from that of the package 9 and distributes (transports) the memory card to the key selling unit 42.

The key selling unit 42 delivers the memory card on which the key 10 is written to the customer in exchange for the money. The key management unit 41 registers the sales of the key 10 in a key sales file 43.

The client terminal 6 serving as a content processing terminal such as a PC owned by the customer has, e.g., the arrangement shown in FIG. 5.

The client terminal 6 incorporates a Web browser 45, card reading unit 46, receiving unit 47, and key acquisition unit 50. The Web browser 45 exchanges information with the content distribution apparatus 3, copyright management apparatus 2, or another client terminal through the network 5 or 7. The card reading unit 46 reads data stored in a memory card 44 which stores the package 9 or key 10 and is distributed for free or purchased at the store apparatus 4. The receiving unit 47 receives the package 9 through the Web browser 45 or card reading unit 46 and temporarily stores the received package 9 in a package memory 48. The key acquisition unit 50 receives the key 10 corresponding to the package 9 through the Web browser 45 or card reading unit 46 for pay and writes the received key 10 in a key memory 49. The receiving unit 47 writes, in a reception data memory 51, a new content received from another client terminal through the network 5 or 7.

The client terminal 6 also incorporates a content decryption unit 52, expansion software memory 54, and expansion software updating/adding unit 56. The content decryption unit 52 decrypts the encrypted content 13 in the package 9 by using the key 10 and writes the decrypted content in a content memory 53. The expansion software memory 54 stores the expansion software of the client terminal 6. The expansion software updating/adding unit 56 updates/adds the expansion software of the client terminal 6, which is stored in the expansion software memory 54, on the basis of the expansion software updated/added data 14 in the package 9 and writes the updated/added expansion software in an updated/added expansion software memory 55.

The client terminal 6 also incorporates a content expansion unit 58 which expands the decrypted content in the content memory 53 by using the updated/added expansion software and displays the content on a display device 57.

The client terminal 6 also incorporates a content creation unit 60 with which the operator of the client terminal 6 creates a new content in a new creation memory 61 by using content creation software 59. The new creation memory 61 stores new data 11a such as a document newly written by the operator of the client terminal 6, and the metadata 12 of the secondary use content which should be inserted in the new data 11a.

The client terminal 6 also incorporates a secondary use permission determination unit 62 and content link information generation unit 63. The secondary use permission determination unit 62 determines on the basis of the secondary use permission flag 12b (12e) in the metadata 12 whether the secondary use of the content 13 in the package 9 stored in the package memory 48 can be permitted. The content link information generation unit 63 writes the metadata 12 of the permitted secondary use content in the new creation memory 61.

A transmitting unit 64 transmits the new content containing the new data 11a and metadata written in the new creation memory 61 on the basis of an instruction from the operator or the package 9 stored in the package memory 48 to another client terminal or transmits a copyright registration request to the copyright management apparatus 2.

FIGS. 6A, 6B, and 6C are views showing creation of a new content on the display device 57 of the client terminal 6 and the transition of a secondary use content display window 57a.

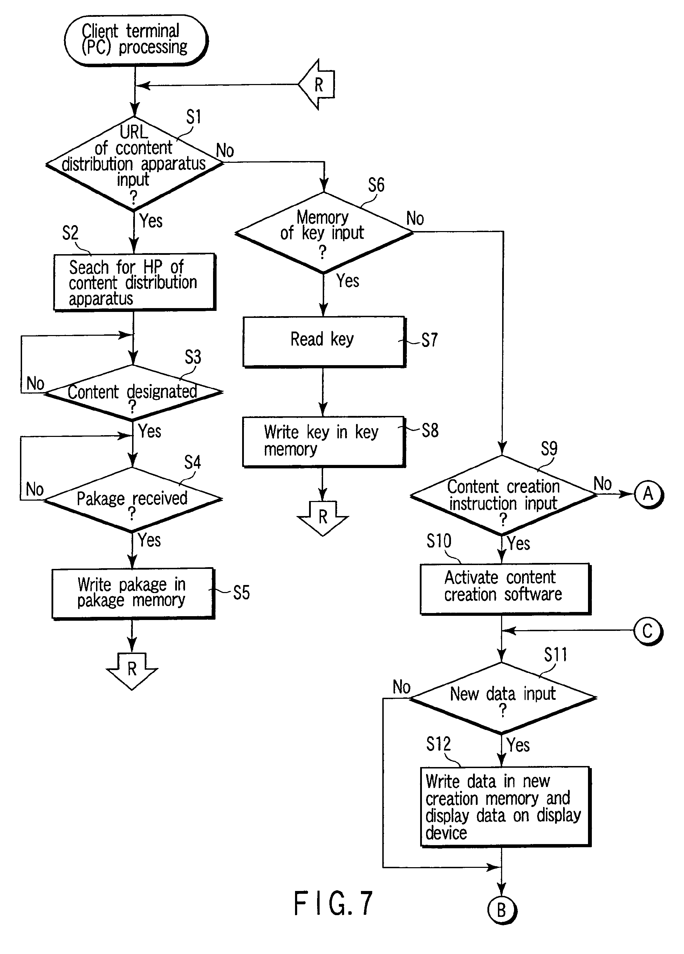

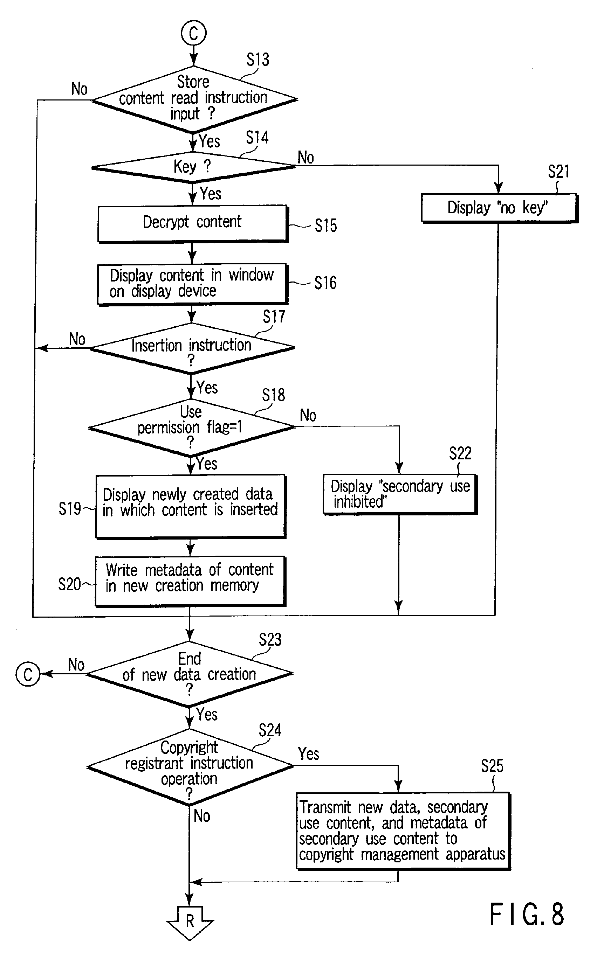

The client terminal 6 executes new content creation processing, display processing of a new content received from another client terminal 6, and copyright registration request processing of the created new content for the copyright management apparatus 2 in accordance with the flowcharts shown in FIGS. 7, 8, and 9.

When the URL of the content distribution apparatus 3 is input by the operation of the customer (S1), the Web browser 45 is activated to search for the homepage (HP) of the content distribution apparatus 3 (S2). When the homepage is displayed on the display device 57 of the client terminal 6, and a desired content is designated on the homepage by the operation of the customer (S3), the package 9 is transmitted from the content distribution apparatus 3. Upon receiving the package 9 (S4), the receiving unit 47 writes the package 9 in the package memory 48 (S5).

When the memory card 44 of the key 10 is input (S6), the key 10 is read by the card reading unit 46 (S7) and written in the key memory 49 (S8).

When a new content creation instruction is input by the operation of the customer (S9), the content creation software 59 is activated (S10). The new data 11a such as a document is input by the operation of the customer from the keyboard (S11), the input new data 11a is written in the new creation memory 61 and simultaneously displayed and output to the display window 57a of the display device 57, as shown in FIG. 6A (S12).

When a read instruction for the content 13 in the package 9 stored in the package memory 48 is input by the operation of the customer to make the secondary use of the content (S13), it is checked whether the key 10 of the content 13 is stored in the key memory 49 (S14). If the key 10 is stored, the encrypted content 13 is decrypted (S15). A decrypted content 13a is window-displayed in at a part of the display window 57a, as shown in FIG. 6A (S16).

When an insertion instruction (secondary use instruction) of the window-displayed content 13a for the new data 11a is input by the operation of the customer (S17), the secondary use permission determination unit 62 is activated to check the state of the secondary use permission flag 12b of the content 13 in the metadata 12 in the package 9 stored in the package memory 48. If the flag is "1" (S18), the secondary use of the content 13 is possible. As shown in FIG. 6B, the window-displayed content 13a is inserted in the new data 11a under creation and displayed (S19). At the same time, the metadata 12 of the content 13 (13a) is written in the new creation memory 61 (S20). That is, the content 13a (13) itself, which should be secondarily used, is not written in the new creation memory 61.

If the key 10 of the content 13 is not stored in the key memory 49 (S14), "no key" is displayed on the display device 57, and the customer is prompted to acquire the key (S21). If the secondary use permission flag 12b of the content 13 is "0" (S18), the secondary use of the content 13 is impossible. Hence, "secondary use inhibited" is displayed on the display device 57 (S22).

When creation of the new data 11a is ended (S23), the new data 11 obtained by inserting the secondary use content 13a in the new data 11a is displayed on the display window 57a of the display device 57, as shown in FIG. 6C. In this state, the new content containing the new data 11a and the metadata 12 of the secondary use content 13a (13) is stored in the new creation memory 61.

When a copyright registration instruction for the created new content (new data 11) is input by the operation of the customer (S24), the new data 11a, the secondary use content 13a, and the metadata 12 of the secondary use content 13a (13) are transmitted to the copyright management apparatus 2 through the network 7 (S25). Actually, the new data 11 obtained by inserting the secondary use content 13a in the new data 11a and the metadata 12 are transmitted.

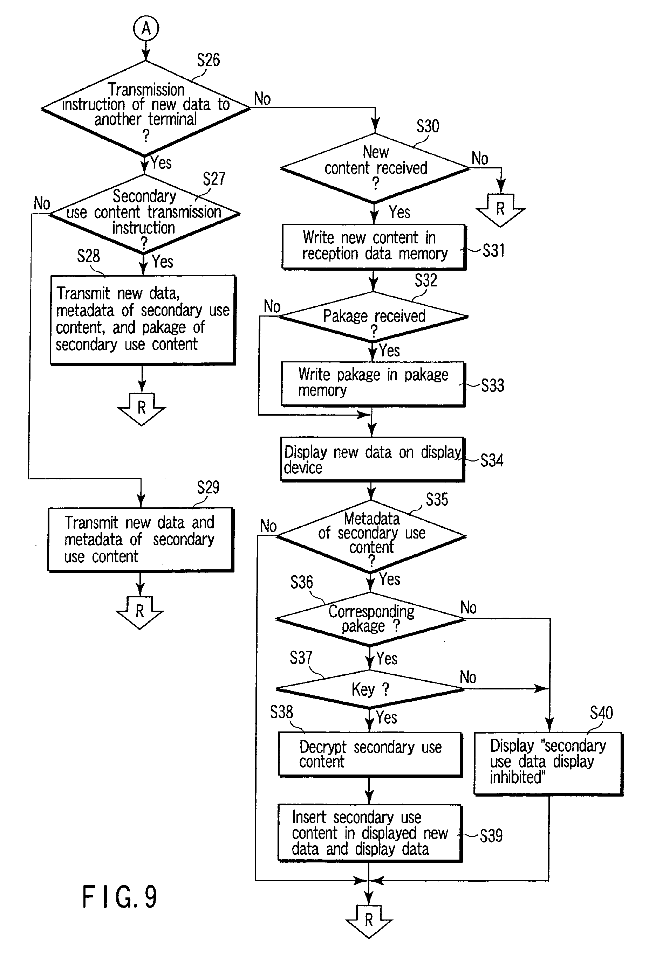

In step S26 in FIG. 9, a transmission instruction for the created new content to another client terminal is input. When a secondary use content transmission command is input subsequently (S27), the new content containing the new data 11a and the metadata 12 of the secondary use content 13a (13), which is stored in the new creation memory 61, and the package 9 of the secondary use content 13a (13) in the package memory 48 are transmitted to another designated client terminal through the networks 5 and 7 (S28).

If no secondary use content transmission command is input (S27), only the new content containing the new data 11a and the metadata 12 of the secondary use content 13a (13), which is stored in the new creation memory 61, is transmitted to another designated client terminal (S29).

When a new content containing the new data 11a and the metadata 12 of the secondary use content 13a (13) is received from another client terminal in step S30, the received new content is written in the reception data memory 51 (S31). When the package 9 of the secondary use content 13a (13) is received from the client terminal subsequently (S32), the package 9 is written in the package memory 48 (S33).

Only the new data 11a of the new content written in the reception data memory 51 is displayed and output to the display window 57a of the display device 57, as shown in FIG. 6D (S34). In this state, the secondary use content 13a is not displayed.

When the metadata 12 of the secondary use content 13a (13) is written in the reception data memory 51 (S35), it is checked whether the package 9 of the secondary use content 13a (13) is written in the package memory 48 (S36), and the key 10 of the secondary use content 13a is stored in the key memory 49 (S37). The secondary use content 13a is decrypted by using the key 10 (S38). The decrypted secondary use content 13a is inserted at a designated position in the new data 11a displayed on the display window 57a of the display device 57 and displayed (S39). In addition, the decrypted secondary use content 13a (13) is displayed on the display window 57a.

In this state, as shown in FIG. 6C, the new data 11 obtained by inserting the secondary use content 13a in the new data 11a is displayed on the display window 57a.

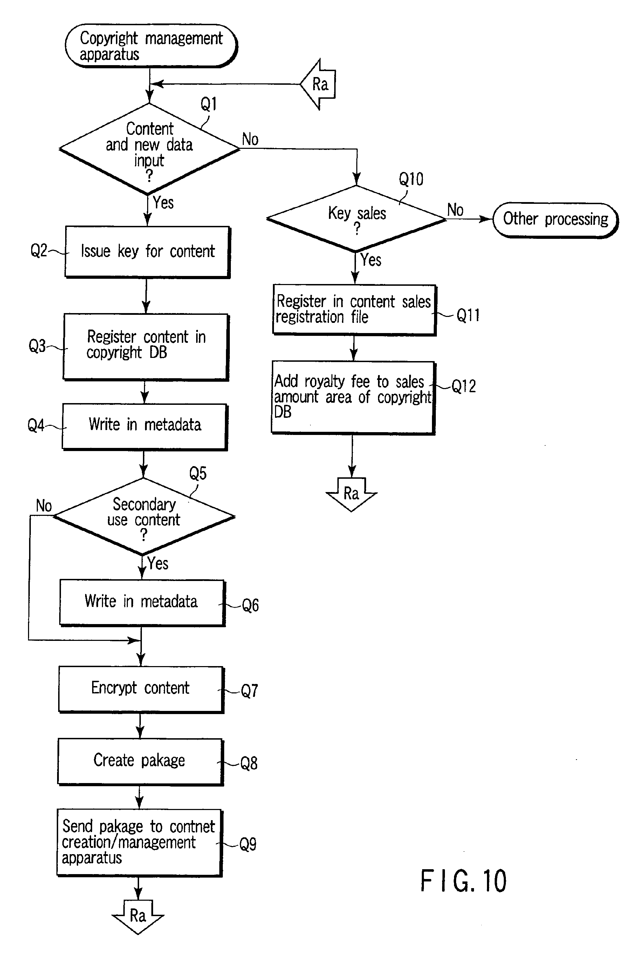

In accordance with the flowchart shown in FIG. 10, the copyright management apparatus 2 of the content sales system executes copyright management processing for the input content 8 or the new data 11 to which the metadata 12 is attached.

When the content 8 from the content creation/management apparatus 1 or the new data 11 containing the attached metadata 12 from the client terminal 6 is input (Q1), the new data 11 is regarded as one content, and the key 10 is issued for the input content (Q2). The key 10 contains specific information that specifies only the content 8 or both the new data 11 and the secondary use content 13a (13) inserted in the new data 11, as described above.

The content is newly registered in the copyright database (DB) 23 (Q3). The ID 12a of the whole content, the secondary use permission flag 12b of the whole content, and the copyright number 12c of the whole content are written in the metadata 12 of the content shown in FIG. 2 (Q4). If the secondary use content 13a is contained in the content (Q5), the ID 12d of the secondary use content, the secondary use permission flag 12e of the secondary use content 13a, and the copyright number 12f of the secondary use content 13a are written in the metadata 12 of the content shown in FIG. 2 (Q6).

After that, the content is encrypted by using the key 10 (Q7). The package 9 in which the encrypted content 13, the created metadata 12, and the expansion software updated/added data 14 are inserted is created (Q8) and sent to the content creation/management apparatus 1 (Q9).

When the key delivery unit 28 sells the key 10 to the client terminal 6 (Q10), the accounting unit 31 updates the content sales amount in the content sales registration file 32 (Q11). The copyright sales management unit 33 increases the sales amount, in the copyright database (DB) 23, of the content designated by the specific information contained in the key 10 distributed for pay by the unit use price. In this case, as described above, when the specific information contained in the key 10 specifies both the new data 11 and the secondary use content 13a inserted in the new data 11, the sales amounts of both of the new data 11 and the secondary use content 13a inserted in the new data 11 are increased in accordance with a predetermined allocation ratio (Q12).

In the content sales system which incorporates the client terminal 6 serving as a content processing terminal and the copyright management system and has the above-described arrangement, in addition to the encrypted content 13, the metadata 12 and the like are inserted in the package 9 distributed from the content distribution apparatus 3 to the client terminal 6 such as a PC through the network 5 or store apparatus 4, as shown in FIG. 2. The secondary use permission flag 12b of the content 13 and the copyright number 12c as copyright information are written in the metadata 12.

When the client terminal 6 which has received the package 9 is to display the encrypted content 13 in the package 9 on the display window 57a, the customer must purchase the key 10 of the content 13.

When the customer newly creates a content by using his/her client terminal 6, and the new data 11a is sequentially input, the new data 11a is sequentially written in the new creation memory 61 and simultaneously sequentially displayed on the display window 57a, as shown in FIG. 6A.

To secondarily use the content 13 stored in the package memory 48 for the new data 11a created by the customer, the secondary use of the content 13 is possible under conditions that the key 10 of the secondary use content 13 is present and that the secondary use permission flag 12b of the content 13 is "1".

In this case, the new data 11 in which the decrypted secondary use content 13a is inserted is displayed on the display window 57a, as shown in FIG. 6C. However, the content 13a (13) itself, which should be secondarily used, is not written in the new creation memory 61. Only the new content containing only the new data 11a and the metadata 12 of the secondary use content 13a (13) is stored in the new creation memory 61.

Hence, when the new content created by the customer on his/her client terminal 6 is transmitted to another client terminal 6 operated by another person, the actual contents of the received new content can be browsed on the display window of the client terminal 6 of the transmission destination only when the package 9 of the secondary use content 13 and the key 10 of the secondary use content 13 are present.

More specifically, the new content itself, which is transmitted/received between the client terminals 6, contains no secondary use content 13a (13) itself which has a copyright. For this reason, even when the new content is copied, the copyright of the secondary use content 13a (13) is sufficiently protected.

In this case, information representing whether secondary use of the content 13a (13) is possible is written in the metadata 12 in advance. The copyright management apparatus 2 need not be inquired about whether the secondary use of the content 13a (13) is possible every time the content is to be secondarily used. Hence, the processing load on the client terminal 6 can be reduced.

In the copyright management apparatus 2, the new data 11 containing the inserted content 13a, which is received from the client terminal 6, is registered in the copyright database 23 as a new content, like the content 8 created by the content creation/management apparatus 1. In this case, the key 10 containing the specific information which specifies the new data 11a and content 13a is also registered in the copyright database 23.

Hence, the key 10 which is provided from the copyright management apparatus 2 to the client terminal 6 for pay contains information which can specify the new data 11a and the secondary use content 13a. For this reason, the copyrights of the new data 11a and secondary use content 13a can be managed as individual sales on the copyright database 23.

### Industrial Applicability

As described above, the present invention is effective in the field of services for creating a new content such as a document, graphic, or video by secondary use of a content already having a copyright or managing and protecting the copyright of a secondary use content inserted in the new content.

## Claims

1. A content processing terminal which creates and displays a new content by secondarily using a content having a copyright for new data, **characterized by** comprising:
a package memory which temporarily stores a package in which metadata containing copyright information of the secondary use content and an encrypted content;
new data write means for writing sequentially input new data in a new creation memory;
metadata write means for writing the metadata of the secondary use content in the new creation memory in accordance with a secondary use request for the content;
new content read means for reading out the new data and the metadata stored in the new creation memory as a new content; and
new content display means for decrypting the encrypted content by using a key which is input from an external device for pay, inserting the decrypted content in the new data, and displaying and outputting the new data in which the decrypted content is inserted.

2. A content processing terminal according to claim 1, **characterized in that** the metadata contains permission enable/disable information representing whether secondary use of a corresponding content is permitted, and
when the permission enable/disable information represents inhibition, secondary use of the content is inhibited.

3. A content processing terminal according to claim 1 or 2, **characterized by** further comprising
transmission means for transmitting the new content read out from the new creation memory and the package,
reception means for receiving a new content and a package from an external device, and
new content display means for decrypting the content in the received package by using the key which is input from the external device, inserting the decrypted content in the new data in the received new content, and displaying and outputting the new data in which the decrypted content is inserted.

4. A content processing terminal according to one of claims 1 to 3, **characterized by** further comprising transmission means for sending the new data in which the content is inserted and corresponding metadata to a copyright management apparatus.

5. A copyright management system which includes a content processing terminal of claim 4 and a copyright management apparatus which manages a copyright for a new content created by the content processing terminal, **characterized in that** the copyright management apparatus comprises:
a copyright database which stores, for each content, copyright information of the content, a key to decrypt encrypted content, and sales information;
copyright registration means for registering copyright information and the key containing specific information which specifies new data and the content in the copyright database while regarding new data in which the content is inserted and which is received from the content processing terminal as the new content;
package creation means for outputting a package in which metadata containing copyright information of each of the new data and the content and the new content which is encrypted again by the key are inserted; and
copyright sales management means for adding each sales information designated by each specific information contained in the key which is provided to the content processing terminal for pay.

6. A content processing method of creating and displaying a new content by secondarily using an encrypted content having a copyright for new data, **characterized by** comprising:
writing input new data and metadata containing copyright information of the content to be secondarily used for the new data in a new creation memory as a new content; and
decrypting the encrypted content by using a key which is input from an external device for pay, inserting the decrypted content in the new data, and displaying and outputting the new data in which the decrypted content is inserted.

7. A copyright management method **characterized by** comprising:
inputting new data in which a content having a copyright is secondarily used and metadata containing copyright information of the secondarily used content;
registering copyright information and a key containing specific information which specifies the new data and the content in a copyright database while regarding the input new data as a new content, the copyright database storing, for each content, copyright information of the content, a key to decrypt encrypted content, and sales information; and
adding each sales information in the copyright database, which is designated by each specific information contained in the key which is provided for pay.
